(19) Europäisches Patentamt
European Patent Office
Office européen des brevets

(11) Publication number: **0 477 765 A2**

# (12) EUROPEAN PATENT APPLICATION

(21) Application number: **91115892.1**

(22) Date of filing: **19.09.91**

(51) Int. Cl.5: **C08L 57/00**, C08L 29/04, C08K 5/00, //(C08L57/00,29:04)

(30) Priority: **24.09.90 US 552278**

(43) Date of publication of application: **01.04.92 Bulletin 92/14**

(84) Designated Contracting States: **AT BE CH DE DK ES FR GB GR IT LI LU NL SE**

(71) Applicant: **The B.F. Goodrich Company**
**3925 Embassy Parkway**
**Akron Ohio 44313(US)**

(72) Inventor: **Kline, Sally Ann**
**26960 Sleepy Hollow Drive**
**Westlake, Ohio 44145(US)**
Inventor: **Perry, Scott**
**33803 Electric, B7**
**Avon Lake, Ohio 44012(US)**
Inventor: **Eckstein, Yona**
**1748 Elm Drive**
**Kent, Ohio 44240(US)**

(74) Representative: **von Kreisler, Alek, Dipl.-Chem. et al**
**Patentanwälte Von Kreisler-Selting-Werner,**
**Deichmannhaus am Hauptbahnhof**
**W-5000 Köln 1(DE)**

## (54) Thermoplastic, coupled barrier composites.

(57) A multi-phase polymer composite having reduced oxygen permeability comprising the reaction product of a vinyl thermoplastic polymer having a major portion comprising an interpolymerized non-carbonyl containing vinyl monomer or mixture of polymerizable monomers, a polyhydric polymer derived from a saponified vinyl ester polymer having greater than about 40 mole percent vinyl alcohol content and a reactive coupling agent. The composites exhibit improved impact and delamination resistance and exhibit a wide processing window for melt processing such as injection blow molding of containers and the like.

EP 0 477 765 A2

## Field of the Invention

This invention relates to the multi-phase barrier composites of chemically coupled polymers and methods of compositing. In particular, thermoplastic vinyl polymers are contacted with high vinyl alcohol containing polymers in the presence of a co-reactive material to provide interphase chemical coupling. The coupling effect substantially eliminates delamination and improves the blend properties enabling commercial processing methods to derive molded, thick-walled containers exhibiting superior gas impermeability. The invention also relates to films, sheets and hollow articles fabricated from these composites.

## Background of the Invention

Currently available commodity thermoplastic polymers such as polyolefin, polystyrene, polyvinyl chloride or (PVC) homopolymers used in the preparation of molded packaging materials are not suitable for use as high gas barrier materials for long term packaging of oxygen sensitive or perishable substances such as cosmetics, pharmaceuticals, foodstuffs, medicines, and health care products. Most thermoplastic polymers with good molding processability and physical properties have a relatively high rate of oxygen permeability yet are relatively water resistant which means that they do not blush on contact with water and are generally considered hydrophobic. Conversely, those thermoplastics with high crystallinity and very low permeability to oxygen have high sensitivity to water, meaning that they blush upon exposure to water or they have unsuitable physical properties for molding thick walled articles. In some instances both deficiencies occur. There is no previous disclosure of a single phase, vinyl thermoplastic having good water resistance, low oxygen permeability, and good physical and processing properties for use in packaging applications.

High acrylonitrile, acrylic compositions having good gas barrier properties are established in molded container packaging applications. For example, impact resistant barrier resins based on high acrylonitrile containing polymers overpolymerized on rubbery butadiene copolymers are disclosed in U.S. Patent Nos. 3,426,102 and 3,586,737. Copolymers of acrylonitrile and vinylidene chloride are described in U.S. Patent No. 3,832,335 as also having improved barrier properties and moldability.

High vinylidene chloride containing copolymers have excellent barrier properties. They are hydrophobic, and have high oxygen and moisture vapor impermeability; however, uses for high vinylidene polymers in packaging applications have been largely confined to thin cast film applications and are not suitable in extrusion or injection molding of thick-walled containers. This stems from their low flexural modulus, low heat distortion temperatures and poor heat stability. Also, vinylidene polymers exhibit poor draw properties and low melt strength prohibiting use in conventional container molding processes.

Hydrophilic polyhydric barrier polymers such as polyvinyl alcohol (PVA) based on hydrolyzed polyvinyl ester have very high oxygen impermeability, but have high water sensitivity. Furthermore, PVA fails to retain a desired degree of oxygen impermeability at conditions of high humidity. In general, PVA exhibits poor melt processing characteristics which precludes molding into shaped articles. The poor melt processability stems in part from a high melting point (220-240° C. is the crystalline melting point range of polyvinyl alcohol) and under these conditions the resin undergoes thermal decomposition. Ethylene modified copolymer versions (EVOH) have been developed with improved water resistance, and thermoplastic melt processing properties. EVOH compositions with greater than about 50 mole percent vinyl alcohol have the desired oxygen impermeability but possess unacceptable water sensitivity. The use of these materials for barrier packaging is largely confined to co-extruded or multi-layered laminated film and multi-layer injection blow molding. Recent advances in multiple layer injection or extrusion blow molding processes enable the use of EVOH as an internal barrier layer sandwiched between water resistant polyolefin layers, for instance. However, these processes are complex, require expensive equipment and complicate efforts in recycling regrind.

Commodity thermoplastic polymers such as low and high density polyolefins, polystyrene, styrene acrylonitrile (SAN), acrylonitrile-butadiene-styrene (ABS) and polyvinyl chloride (PVC) compositions are commonly used as packaging materials. These resins are preferentially selected for molded container packaging applications for their low cost, ease of processing, good strength and impact resistance in compounded form. However, these resins are not adequate alone for low oxygen permeability demanded in the aforementioned package uses. The gas barrier properties of these resins may be improved by chemical or physical modification.

Blending with hydrophilic barrier materials presents a problem due to differences in the solubility parameters between the aforementioned commodity thermoplastics and hydrophilic polyhydric barrier polymers such as PVA and EVOH. There are serious deficiencies in blend compatibility of these polymers. Poor interfacial adhesion and poor compatibility exist in such blends resulting in observed delamination and

unacceptable impact resistance, cracking or crazing and poor clarity.

Unacceptable incompatibility of blends of polyethylene-vinyl alcohol (EVOH) and the aforementioned hydrophobic thermoplastic resins has been previously encountered. Blends of polyethylene-vinyl alcohol with thermoplastic polymers including polyvinyl chloride are disclosed in U.S. Patent 4,003,963 ('963). Incompatible blends with EVOH are found with low density polyethylene (LDPE), high density polyethylene, (HDPE), polystyrene (PS), polyacrylonitrile-butadiene-styrene (ABS), and poly styrene-acrylonitrile (SAN) resins. An apparently compatible blend of EVOH and PVC is disclosed. Milled, pressed plaques are shown to be clear and exhibit a permeability to oxygen that is lower than polyvinyl chloride alone. The disclosure '963 teaches the necessity of avoiding carboxyl groups in the PVC which can crosslink with the ethylene-vinyl alcohol. This crosslinking occurs during heating and mixing during the compounding and molding processes and presumably causes gelation and loss of compatibility between the two phases. Chemical bonding of the interfacial region is avoided in this approach. However, the use of laboratory processes of milling and compression molding of plaques does not reveal the unacceptable incompatibility between homo-PVC and EVOH under actual container molding conditions.

U.S. Patent No. 4,613,644 discloses improvements in blend miscibility between a thermoplastic resin with EVOH when it is incorporated in the blend a low molecular weight salt or oxide containing at least one element selected from Groups I to III of the periodic table. This approach achieves compatibilization using metal salt or oxide modifiers to increase adhesion between the polymer phases.

When employing a commercial, injection blow molding process, unacceptable results were obtained when attempting to mold containers from the physical blend of homopolymer PVC and either PVA or EVOH. Under these conditions insufficient interphase adhesion resulted in delamination. Thus, there exists a need for achieving acceptable blends of vinyl-based thermoplastic polymers and EVOH polymers having superior gas impermeability and wide thermal processing window enabling their practical use in molded thick walled articles such as containers, bottles and the like. Acceptable blends must exhibit good impact resistance, delamination resistance and reduced gas permeability.

**Summary of the Invention**

The present invention is directed toward chemically bonded multiphase polymer composites and methods of compositing. The composites exhibit reduced gas permeability and comprise:

at least one vinyl based thermoplastic continuous phase polymer when blended or polymerized in the presence of

a vinyl alcohol containing discontinuous phase polymer, containing greater than about 40 mole percent of vinyl alcohol; and

a reactive coupling agent chemically bonded to both the vinyl polymer component and the polyhydric polymer component wherein the reactive coupling agent is optionally incorporated within the vinyl thermoplastic, or the polyhydric polymer before compositing.

**Description of The Preferred Embodiments**

I. Hydrophobic Thermoplastic Polymers

Generally, the composite of the present invention forms on reaction of a free or pendant reactive coupling agent at the interface between the vinyl thermoplastic and a polyhydric polymer, resulting in a composite having improved moldable barrier performance and a wide melt processing window. Selection of a desirable vinyl thermoplastic polymer component is based on consideration of cost and performance for the intended use. Of importance are the physical and chemical properties of the vinyl polymer since it becomes the continuous phase of the composite and largely affects the bulk properties of the composite. The aforementioned problem of unacceptable compatibility between polyhydric barrier polymers and vinyl thermoplastic polymers is overcome by the present invention, therefore a broad range of vinyl polymers can be selected.

This invention is directed specifically to those vinyl polymers having a major portion consisting of a polymerized non-carbonyl vinyl monomer having a terminal vinyl ($H_2C=C<$) group. Examples of such thermoplastic vinyl polymers for use in the present invention include low and high density polyolefins, polystyrene, styrene acrylonitrile (SAN), acrylonitrile-butadiene-styrene (ABS) and vinyl halide polymers such as polyvinyl chloride (PVC) compositions. These resins are preferred for their low cost and performance attributes in applications such as injection blow molding of packaging articles, bottles and the like. They are hydrophobic which means that they resist blushing on contact with water or absorb only minor

amounts of water in the unmodified state. The above polymers generally are compounded for good gloss, impact resistance, water-white color and processing characteristics. In order to achieve the best balance of properties giving a priority for low permeability to oxygen, polyvinyl halide, especially PVC, is among the lowest in oxygen permeability of the aforementioned thermoplastic and is preferred. Vinyl halide polymers refer to polyvinyl chloride, homopolymers and copolymers of vinyl halides including, for example, vinyl chloride/vinyl fluoride copolymers, vinyl chloride/vinylidene chloride copolymers and copolymers with vinyl bromide. Vinyl halide copolymers may be copolymerized with minor amounts of one or more polymerizable olefinic monomers having at least one terminal ethylenic unsaturated ($H_2C=C<$) grouping to form a functional vinyl thermoplastic polymer. The copolymerizable monomer can be a functional comonomer. Specific examples of desired functional ethylenic unsaturated copolymerizable monomers are those which are capable of a coupling interaction with a polyhydric polymer such as acrylamide or methacrylamide, N-alkylol acrylamides or methacrylamides such as N-methylol acrylamide, N-methylol methacrylamide, N-alkoxy acrylamides or methacrylamides such as N-butoxy acrylamide and N-isobutoxy methacrylamides, oxirane group containing ethylenic unsaturated comonomers such as glycidyl acrylate, allyl glycidyl ether; ethylenic functional silanes such acrylated alkoxy-silane, allyl trimethoxy silane, mercapto alkyl silane, vinyl triethoxy silane, and the like. In one embodiment of the composite wherein the method of coupling of the polyhydric polymer is by way of reaction with the aforementioned functional vinyl thermoplastic polymer it may be optionally desirable to prepare the vinyl thermoplastic polymer by incorporating the functional comonomer in sequential manner during vinyl polymerization thereby locating the monomer towards the outer surface of the polymerizing or polymerized vinyl thermoplastic. Such a morphology is generally termed "core-shell." This technique provides for location of functionality at the outer surface and there is thus an absence of uniform location of reactive functionality throughout the vinyl thermoplastic polymer. This presumably avoids possible undesirable crosslinking and gelation within the vinyl thermoplastic polymer. Placement of reactive groups outwardly also enables more efficient functional monomer utilization thereby reducing the level of reactive monomer required to achieve the desired interphase coupling effect.

As examples of other vinyl comonomers, there may be mentioned the alpha, beta-olefinically unsaturated esters of acrylic acid such a methylacrylate, ethylacrylate, butylacrylate, octylacrylate, cyanoethylacrylate, etc.; hydroxyalkyl acrylates such as hydroxy-ethyl acrylate, hydroxy propyl acrylate, etc.; esters of methacrylic acid such a methylmethacrylate, butylmethacrylate, etc.; nitrile such as acrylonitrile, methacrylonitrile, etc.; vinyl ethers such as ethyl vinyl ether, chloroethyl vinyl ether, etc.; styrene derivatives such as alpha methyl styrene, vinyl toluene, chlorostyrene, etc.; vinyl naphthalene; esters such as allyl or vinyl chloroacetate, vinyl acetate, etc.; vinyl pyridine; and methyl vinyl ketone.

The vinyl halide polymers particularly useful in the present invention as the thermoplastic continuous phase component are homopolymers and copolymers made by the polymerization of vinyl chloride alone or in admixture with one or more of the aforementioned copolymerizable olefinic monomers in amounts up to about 20% by weight based on the weight of the monomer mixtures. The preferred vinyl thermoplastic polymer is polyvinyl chloride homopolymer produced by mass polymerization or suspension polymerization.

The amount of vinyl polymer present in the composite can range from 50 to 98 percent by weight based on the combined weight of the vinyl polymer and the polyhydric polymer and more preferably from 75 to 90 percent. In order to simplify the discussion and to minimize the examples used to illustrate the invention, the foregoing illustrations will hereinafter be described in connection with the preferred vinyl thermoplastic continuous phase polymer which is a homopolymer of PVC, it being understood that this is merely intended to be illustrative of the preferred embodiment and not limiting as to the choice of the vinyl polymer continuous phase component applicable to the present invention.

The preparation of vinyl halide polymers, and particularly, polyvinyl chloride polymers including homopolymers and copolymers, is well known in the art. Examples of patents describing polyvinyl halides and the preparation of polyvinyl halides include U.S. Patents 4,751,118,4,748,218 and 4,728,677. Vinyl halide polymers and copolymers, and in particular polyvinyl chloride homopolymers and copolymers are available commercially such as, from The B.F.Goodrich Company, Cleveland, Ohio under the general trademark "Geon."

II. The Polyhydric Discontinuous Phase Polymer

The polyhydric discontinuous phase polymer useful in the composite of the present invention is typically derived from a polymer containing polymerized vinyl ester which is hydrolyzed to its vinyl alcohol form. Polyvinyl esters include vinyl acetate, vinyl propionate and vinyl butyrate for example. The polyhydric polymer can also be a copolymer of ethylene and vinyl ester. The level of hydrolysis to form the polyvinyl

alcohol containing polymer is at least 70 percent, more preferably the level of hydrolysis is 97 percent and most preferably higher than 99 percent. The polyhydric polymer can also be a copolymerizable macromonomer, that is, a low molecular weight, multi-functional polyhydric polymer or hydrolyzable precursor having attached copolymerizable grouping(s) such as ethylenic, acrylic, vinyl acetal or allylic groups.

Poly(vinyl alcohol) (PVA) useful in the present invention is characterized by having a molecular weight in the range of about 5000 to about 125,000 determined by measuring the Brookfield viscosity of a 4 weight percent aqueous solution at 20 ° C. This molecular weight range corresponds to a viscosity range of about 5 to about 65 centipoise; the degree of hydrolysis of the PVA ranges generally from about 70 to about 99.5 percent. The preferred PVA used in the present invention is the saponified product of a copolymer of ethylene and vinyl ester to form ethylene vinyl alcohol copolymer (EVOH) of hydrolysis greater than about 99.5%.

EVOH copolymers generally refer to saponified ethylene vinyl ester copolymers. The preferred EVOH polymers are derived from ethylene/vinyl acetate copolymers. Hydrolysis of the ester portion yields a copolymer having the general structure: $H-(CH_2CH_2)_m-(CH(OH)CH_2)-_nH$ wherein m and n are integers ranging from about 5 to 2000, preferably 25 to 1000 and most preferably from about 50 to about 800. The preferred EVOH copolymers contain from about 15 to about 55 mole percent ethylene and from about 45 to about 85 mole percent vinyl alcohol. Preferred EVOH copolymers have molecular weights in the range of from about 10,000 to about 40,000 corresponding roughly to melt indices of about 0.5 to about 15 or higher, and more generally from about 0.5 to about 6.0 as determined by ASTM Test D-1238 Procedure E or L using a weight of 2160 grams and a temperature of 190 ° C. The EVOH copolymers typically have densities of about 1.1. to 1.2, and melting points of from about 150 to about 200 ° C or higher. Ethylene-vinyl alcohol copolymers useful in this invention are commercially available from the EVAL Company of America under "SC" designations. Examples of EVOH copolymers available from this company are identified in the following Table I.

TABLE I

| EVOH Resins | | |
|---|---|---|
| EVAL Grade | Ethylene (Mole %) | Melt Index* |
| SC-F 100 | 32 | 0.6 |
| SC-F 101 | 32 | 1.3 |
| SC-F 104 | 32 | 4.4 |
| SC-H 101 | 38 | 1.5 |
| SC-K 102 | 38 | 2.9 |
| SC-E 105 | 44 | 5.5 |
| SC-G 115 | 48 | 15.0 |

*Melt Index at 190 ° C/2160 gm, gm/10 min.

A series of EVOH copolymers is also available from the E. I. du Pont de Nemours Co. with a similar range of ethylene content and are commercially designated "Selar."

It is anticipated that minor amounts of copolymerizable monomers may be incorporated into the polyhydric polymer as a further enhancement. Examples of copolymerizable monomers include propylene, 1-butane, 1-hexene, 4-methyl-1-pentene, acrylic acid esters, methacrylic acid esters, maleic acid, fumaric acid, itaconic acid, higher fatty acid vinyl esters, alkyl vinyl ethers, N-2(2-dimethylaminoethyl)-methacrylamides or quaternized products thereof, N-vinylimidazole or quaternized products thereof, N-vinylpyrolidone, N-butoxymethylacrylamide, vinyltrimethoxysilane, vinylmethyldimethoxysilane, vinyldimethylmethoxysilane, and the like. Such an enhancement is understood to be an alternative embodiment of the polyhydric polymer.

The amount of EVOH incorporated into the composite provides desirable results over a range from about 1% to about 60% by weight, preferably from about 2% to about 30% and most preferably from about 10% to about 25% based on the combined weight of the vinyl polymer and EVOH. In these amounts, the polyhydric polymer is present as the dispersed phase. Phase inversion is to be avoided so that the continuous phase is the thermoplastic vinyl polymer.

III. Reactive Coupling Agents/Co-reactive Monomers

The reactive coupling agents suitable for use in forming the reaction product which forms the composite of the present invention comprises generally, multisubstituted inorganic compounds having attached organic groupings. The organic groupings contain one or more functional organic components having one or more reactive groups which react to produce a chemical coupling at the interface between the vinyl polymer and the polyhydric polymer phases. Alternatively, co-reactive monomers can provide a coupling effect. These also function as organic based coupling agents and are alternatively referred to as multi-functional or heterofunctional monomers, co-monomers, or oligomers. For simplicity, these are referred to as co-reactive monomers. All of these forms can also undergo reactive coupling at the interfacial region of the composite. Examples of co-reactive monomers are alkoxy acrylates, glycidyl acrylates and methacrylates, ethoxylated alkylol acrylates and methacrylates. Specific examples are 2-ethoxy ethyl acrylate, (2-ethoxy) ethoxy ethyl acrylate, propoxylated neopentyl glycol diacrylate, glycidyl methacrylate and (methallyl)glycidyl ether.

Generally these contain vinyl copolymerizable group(s) copolymerized with either the vinyl thermoplastic or the polyhydric polymer precursor prior to forming the composite. As mentioned above, the vinyl thermoplastic polymer can alternatively be polymerized in the presence of a reactive coupling agent. In this case the preferred coupling agent contains a vinyl copolymerizable ethylenic unsaturated group.

The coupling effect is a result of what can be termed a chemical crosslink at the interface between the thermoplastic continuous phase and the polyhydric discontinuous phase. The reactive coupling preferredly produces a covalent bonding in the inter-phase region. Crosslinking is preferredly restricted to the interphase region and further self crosslinking (gelation) within each phase is avoided when forming the composite of the present invention. The improvement resulting from interphase chemical bonding enables a wide thermal melt processing window for forming finished articles from the composite. In other words, the composites are versatile and can be fabricated into articles under a variety of commercial processing conditions such as extrusion blow molding and injection molding. In addition, these chemically bonded composites demonstrate an advantageous feature of re-processability as re-grind.

Examples of reactive inorganic coupling agents are the several classes of inorganic ortho-esters, chelates and coordinates. Specific classes of inorganic coupling agent compounds are substituted phosphonates, zirconium based compounds, alkyl borates, alkyltin, tetra alkyl titanates, organosilane esters and organofunctional silanes.

Examples of titanate coupling agents are tetra alkyl titanate, tetra-n-butyl titanate and tetrakis(2-ethyl hexyl) titanate; exemplary titanate chelates are acetylacetonate titanate chelate, lactic acid titanate chelate and ethyl acetoacetate titanate chelate.

Examples of zirconium based coupling agents are zirconium acetate, ammonium zirconium carbonate, zirconium oxychloride, zirconium hydroxychloride and zirconium nitrate.

Examples of substituted phosphonates are bis(2-chloroethyl) vinylphosphonate, diethyl vinylphosphonate, diallyl phenylphosphonate, dialkyl phosphono acrylates such as diisopropyl phosphonomethyl acrylate.

Examples of alkyltins are tetra alkyl tins and tetra-aryltins, dibutyltin dichloride, dibutyltin dilaurate and dimethyltin dichloride.

Example of alkyl borates are trimethoxy borane (methyl borate), cresyl borate, isopropyl borate and the like.

Preferred inorganic reactive coupling agents contain reactive groups on the inorganic substituents which further undergo chemical reaction with the polymer components of the composites of the present invention under hot processing conditions during, for instance melt phase mixing, compounding, pelletizing and extruding operations. This technique of carrying out the chemical coupling reactions during melt processing of the vinyl thermoplastic in this disclosure will generally be referred to as reactive processing.

One example of a broad class of inorganic based, organofunctional coupling agents are the titanates. Titanate coupling agents have the general structure

$(X)_m$ - Ti - $(O\text{-}Y\text{-}R\text{-}Z)_n$ (I)

wherein X is a hydrolyzable group which can bond to a proton bearing group. Examples of proton bearing groups are hydroxyl groups which are present in the polyhydric polymer and optionally present in the thermoplastic vinyl polymer. M and N are integers less than 10 and vary according to whether the compound is tetra alkyl ($M + N = 4$), or in those instances where the titanate is a chelate having an increased coordination number ($M + N > 4$) on interaction with acylates, for instance.

Referring to (1) above, the Y group may be alkyl, carboxy, sulfonyl, phenolic, phosphate, pyrophosphate or phosphite. Thus, Y may have other functions; for example, stabilizing effects which are not directed toward coupling properties. Where the Y group is an alkyl group, this can provide additional compatibilization with each phase. The R group is an alkyl group. R may provide added compatibility, but may also provide impact modification, lubricity or plasticization improvements. The Z component is chosen for chemical reactivity with the thermoplastic polymer or the polyhydric polymer depending on the other reactive functionality chosen for X. Examples of reactive Z groups are hydrolyzable groups such as alkoxy, alkoxy-acrylate, alkoxy vinyl groups, allyl groups, unsaturated acrylate or methacrylate. Since these materials are moisture sensitive, the mixture of a polyhydric polymer with the thermoplastic polymer in the presence of a reactive coupling agent is carried out in the substantial absence of moisture.

The particular class of coupling agents preferred for use in the polymer composites of the present invention are derived principally from organosilanes. Several classes of organosilanes are suitable and can be represented by the following general structure:

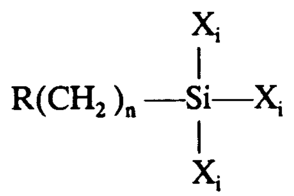

(II)

where $X_i$ are hydrolyzable groups and R may be vinyl, allyl alkyl, hydroxy alkyl, alkoxy alkyl, acryloyl, or methacryloyl group. Examples of organosilanes are organochlorosilanes, organosilane esters and organofunctional silanes. Organochlorosilanes are highly reactive but are extremely moisture sensitive, and liberate HCl upon hydrolysis. These drawbacks can be avoided with the use of hydrolyzable organosilane esters or optionally organofunctional silanes having both hydrolyzable and functional organic substituents such as an ethylenic unsaturated group.

In one embodiment, a hydrolyzable organosilane ester can be contacted with a polyhydric polymer and an alkoxy containing vinyl thermoplastic such as a vinyl halide/vinyl ether copolymer or a hydroxyl containing vinyl polymer such as a vinyl chloride/hydroxy acrylate copolymer. In another example, an isocyanato-functional silane such as gamma-isocyanato-propyltriethoxysilane can be reactive processed with a hydroxyl functional vinyl polymer or copolymer. This coupling reaction is preferably carried out in the presence of a suitable urethane catalyst such as stannous octoate, stannous oleate, or dialkyltin dicarboxylates. The residual tin compound would also provide additional thermal stabilizing effect on the vinyl polymer if employed. In another alternative, a hydroxyl functional vinyl polymer or copolymer can be reacted with an organofunctional silane having a reactive group such as halo or oxirane. For example β-chloromethylphenylpropyltriethoxysilane can be reacted with a hydroxyl functional vinyl copolymer. Similarly, chloropropyltriethoxysilane can be reacted with a hydroxyl functional vinyl polymer or copolymer. Another example of bonding of organofunctional silane groups to the polymer backbone by direct reaction is the reaction of an oxirane functional organosilane such as glycidoxypropyltrimethoxysilane or beta-(3,4-epoxycyclohexyl)ethyltrimethoxysilane with the hydroxyl-functional vinyl copolymer. Alternatively, an organofunctional silane can be bonded first with a vinyl thermoplastic polymer by first reacting a difunctional organic compound with an organofunctional silane to form a copolymerizable intermediate which is subsequently copolymerized with the polymerizing vinyl polymer or the copolymerizable intermediate can be graft reacted with a vinyl polymer or polymerizing vinyl polymer. The difunctional organic compound can be any one in which at least one of the functional groups is co-reactive with hydrolyzable groups on the silane and another reactive group remaining will not preferentially react with the silane but can react with the vinyl thermoplastic polymer.

Generally, sufficient interphase coupling reaction can be achieved during reactive processing at temperatures of about 175 °C and above without a catalyst.

Organosilane esters are suitable coupling agents for use in the present invention. By reference to (II) above these comprise hydrolyzable groups wherein $X_i$ are acyloxy esters. Examples are acetoxy triesters, and diesters. Esters generally provide greater hydrolytic stability under moist conditions; however, for reactive processing methods employed for chemical compositing in the dry state, silane esters are relatively slow reacting. Therefore under desired reactive processing conditions it is preferred to utilize more active lower alkoxy groups. Where ($X_i$) groups are larger than $C_3$ alkoxy, the by-product alcohols are less volatile and slow to react, and therefore not preferred. Examples of preferred lower alkoxy hydrolyzable groups ($X_i$) include methoxy, ethoxy or propoxy, i.e., $C_1$-$C_3$ alkoxy. Other groups such as N-methylol, epoxide, amino, carboxy, and amido are also anticipated. The preferred ($X_i$) groups can be the same, but need not be.

The coupling mechanism between the organosilane and the polyhydric polymer is achieved preferably by way of reaction of hydrolyzable groups of the coupling agent and the hydroxyl groups on the polyhydric polymer. The remaining factor in selecting a particular organosilane is based on the desired co-reactivity of the functional R group of II above ($R-(CH_2)_n-Si-$) with the vinyl thermoplastic. This group is directed either toward reaction with a vinyl thermoplastic polymer or a vinyl thermoplastic composition undergoing polymerization. The reactive organofunctional silane can thus be chosen to copolymerize with vinyl chloride. Preferably, the reactive organofunctional silane is one which is coupled to a vinyl chloride polymer.

It is preferred to use a non-hydroxy functional vinyl polymer and one which has essentially no pendant groups reactive with hydrolyzable groups. The preferred organofunctional silanes therefore contain a vinyl polymer reactive group, such as an ethylenic ($H_2C=C<$) or mercapto group in the R group of II above. Examples of vinyl polymer reactive functionalities are vinyl, allyl, mono, di-, and tri-acrylate and methacrylate, mercaptan, or any substituent R group containing a free-radical reactive group. Preferred ethylenic groups are terminal monoethylenic groups such as vinyl or allyl groups.

Reactive processing of the polyhydric polymer, the vinyl thermoplastic polymer and a free-radical reactive silane coupling agent is best carried out in the presence of a free-radical initiators which activate under the preferred reactive processing conditions at or above 100 ° C. Suitable classes of initiators that may be employed are vinyl polymer miscible initiators such as organoperoxides, diperoxides, monohydroperoxides, azo compounds, peroxyesters, percarbonates and the like. Specific examples of these include, but are not limited to, Di-tertiary butyl peroxide, tertiary butyl peroxy di-pivalate, tertiary butyl peroxy neodecanoate, alpha cumyl peroxy neodecanoate, benzoyl peroxide, lauryl diperoxide, cumene hydroperoxide, azo-bisisobutyronitrile, di-isopropyl peroxydicarbonate, di(sec-butyl) peroxydicarbonate (SBP), acetyl cyclohexane sulfonyl peroxide, or mixtures thereof. Preferably, the amount of catalyst used ranges from about 0.002 to 0.50 percent based on the weight of polyhydric polymer used. Preference as to the specific choice depends on the composition of vinyl thermoplastic polymer employed.

The preferred coupling method for homo-PVC and EVOH is the peroxide initiated reaction of an $\alpha,\beta$-unsaturated ethylenic functional alkoxysilane. The process can be carried out in one step by combining all three components or in multiple steps one of which preferably consists of pre-treating the EVOH with an $\alpha,\beta$-unsaturated ethylenic functional alkoxysilane coupling agent prior to reactive processing with homo-PVC. Examples of preferred ethylenic unsaturated silanes are vinyl or allyl functional alkoxy silanes. Examples of vinyl silanes are: vinylalkoxysilanes such as vinyltrimethoxysilane, methylvinyltrimethoxysilane, vinyltriethoxysilane, methylvinyltriethoxysilane, vinylmethyldimethoxysilane, vinylethyldiethoxysilane, divinyldiacetoxysilane and vinyltris(2-methoxyethoxy)silane; vinylacetoxysilanes, such as vinylmethyldiacetoxysilane, vinylethyldiacetoxysilane and vinyltriacetoxysilane. Examples of allyl functional silanes are: allylalkoxysilanes such as allyltrimethoxysilane, allylmethyldimethoxysilane, and allyltriethoxysilane; diallylalkoxysilanes and diallylacetoxysilanes such as diallyldimethoxysilane, diallyldiethoxysilane and diallyldiacetoxysilane, as well as other similar ethylenically unsaturated organosilanes containing alkoxy group(s). Of the vinyl-type silanes described above, the monovinyl silanes (e.g., vinyltrimethoxysilane or vinylmethyldimethoxysilane as contrasted with divinyl-type silanes) are preferred. Preferred vinyl-type silanes include vinyl alkoxy silanes especially those containing lower alkoxy groups ($C_1$ to $C_3$).

The method of forming the composite can be approached by any of the following methods, it being understood that where desirable, catalysts or initiators may be optionally employed.

(i) pretreatment of the vinyl thermoplastic with reactive coupling agent followed by reactive processing with an untreated polyhydric polymer;

(ii) pretreatment of the polyhydric polymer with reactive coupling agent followed by reactive processing with a vinyl thermoplastic polymer;

(iii) simultaneous reactive processing of a vinyl thermoplastic and polyhydric polymer in the presence of a reactive coupling agent;

(iv) grafting of a reactive coupling agent with a vinyl thermoplastic polymer followed by reactive processing with a polyhydric polymer;

(v) reactive processing of a polyhydric polymer with a vinyl thermoplastic copolymer wherein the vinyl thermoplastic polymer has incorporated pendant reactive sites which react with the polyhydric polymer.

(vi) reactive coupling of a polyhydric polymer with a co-reactive monomer yielding pendant vinyl polymer reactive groups which react on subsequent reactive processing.

(vii) copolymerization of polyhydric polymer precursor with co-reactive monomer which reacts with a vinyl polymer during subsequent reactive processing.

For simplicity, the following examples illustrate the practice of this invention using the compositing approach of methods (i), (ii) or (iii). It is understood that illustration of these methods is not intended as limiting the compositing approach in light of this disclosure. A reasonable number of trials by one skilled in

the art may be needed to achieve optimal ease of processing to arrive at composites having the desired properties outlined hereinbelow. Under method (ii), the silane coupling agent is preferably dissolved in an organic solvent which is a solvent for the silane and essentially non-solvent for polyhydric polymer. Desired solvents are those which can provide a solution containing at least two (2) weight percent of the desired silane at about 25° C. Typically silane solvents are selected from liquid ketones, such as acetone, methyl ethyl ketone, methyl isobutyl ketone, diisobutyl ketone, as well as tetrahydrofuran and dimethyl formamide. Preferred solvents are water miscible, lower molecular weight ($C_6$ or less), organic solvents. Included are such compounds as methanol, ethanol, propanol and isopropanol. It is anticipated that the silane can be applied by contacting either the thermoplastic vinyl polymer (method 1) or preferably in this case the polyhydric polymer (method 2) to the vapors of a hydrolyzable silane in a dry blending process.

If desired, the coupling reaction for the pretreatment of polyhydric polymer in method 2 can be catalyzed in order to speed up the reaction. Generally suitable catalysts include tertiary amines, acidic catalysts, and organo-tin compounds. Representative of the various tertiary amines are triethyl amine, trimethyl amine, triisobutyl amine and tributyl amine. Representative of acid compounds are p-toluene sulfonic acid and p-benzene sulfonic acid. Representative of various organotin compounds are dibutyl tin dilaurate and stannous octoate.

Mixing of the components can be accomplished in any mixing vessel, for instance in a Henschel mixer. Coupling of the polyhydric polymer with hydrolyzable group(s) on the coupling agent results from hydrolysis and generally occurs after sufficient contact with the silane. The time required to sufficiently contact the silane can be shortened on application of heat during the drying step. Where solvent solutions of coupling agents are employed, the desired drying temperature can be varied based on the reactivity and volatility of the solvent and silane by-product. It is not necessary to achieve any high degree of coupling in this step where subsequent reactive processing will involve additional significant heat and work energy.

The amount of silane employed should be sufficient to give a weight pickup on the EVOH polymer to be treated of at least 0.01% where other non-silicone coupling agents are used, more weight pickup is generally required including up to 1-2%. Generally the weight pickup for a silane is from .01 to 2% and preferably 0.5 to about 1%. There is generally no advantage in applying more than 2% by weight of coupling agent when the coupling agent is a reactive silane. Optimal amounts of non-silicone coupling agents can be determined with a reasonable level of trial and error by one skilled in general thermoplastic compounding art.

Additional compounding ingredients may be desired for incorporation into the multiphase vinyl-based barrier composite. Recipes can be developed by anyone skilled in the art and a reasonable amount of experimental trial and error is necessary to achieve optimized compound compositions. Thus, in addition to the vinyl polymer, the polyhydric polymer, and a coupling agent, the composite will generally contain additional materials normally incorporated into vinyl polymer compounds for various purposes. For example, the vinyl polymer composites generally will contain various additives including: impact modifiers such as methyl methacrylate-butadiene-styrene terpolymer present in amounts ranging from about 1 to about 20 parts by weight and preferably 5 to about 15 parts per hundred vinyl resin (phr); acrylic processing aids such as methyl methacrylate polymer present in amounts from about 0.15 to about 5 parts; heat stabilizers such as dioctyl tin mercaptide and maleates present at about 1 to 5 phr; antioxidants such as epoxidized soybean oil and hydroxy phenyl compounds present at about 0.5 to 2 phr; lubricants such as hydrocarbon waxes, mineral oil, stearic acid and glycerol monostearate present at about 0.5 to about 2 phr; ultraviolet stabilizers such as benzophenones; and optionally tinting levels of 0.5 to about 2 phr of colorants.

The various components which comprise the polymer composites as described above are thoroughly mixed together before typically fusing into pellets prior to molding into the desired article. Mixing may be accomplished by any of the customary methods known to those skilled in the art such as with a Banbury, Henschel, roll mills or other mixers and mixer-compounder combinations.

The examples below illustrate the vinyl polymer compositions using a polyvinyl chloride continuous phase polymer in accordance with the present invention. In each of the examples, the identified components were compounded, two-roll milled at temperatures of about 175° C, cubed and extrusion blow molded into a hollow container. Reactive processing the composite components formed the reaction composite product under heat and mechanical shearing. Upon sufficient reaction, substantial reduction or elimination of delamination was achieved. Verification of this result includes tests of the end-use article such as crush resistance or drop tests. Alternatively, in the laboratory, testing was done by observing delamination in sections from a blow molded article.

The oxygen transmission rate of the materials prepared from the vinyl polymer compositions listed below was determined utilizing the procedure described in more detail in the Mocon/Modern Controls, Inc. manual, Mocon PN140-042, Revision E. Measurements of the oxygen transmission rate were performed

either directly on a molded container or on film plaques with an accurately measured thickness typically of 60 mills (0.060 in.) at room temperature. Following this procedure, one side of the sample was exposed to oxygen-free nitrogen and the other side was exposed to 100% oxygen at atmospheric pressure. The data below were reported in terms of a 100% oxygen atmosphere. An oxygen-sensitive coulometric fuel cell is used for the detection and measurement of the transmission rate of the oxygen which passes through the sample. The gas transmission rates for the vinyl polymer compositions of the present invention (and control examples) were reported either in cc. $O_2$ per container • day or in cc. $O_2$ • mils per 100 in.$^2$ • 24 hours. The preferred compounds exhibit a 60 mil oxygen transmission rate of no more than 10 cc. $0_2$ mil/100/in$^2$ per 24 hr. Most preferredly the composites of the present invention exhibit an oxygen transmission rate as measured above of no more than 5 cc. $O_2$ • mils per 100 in.$^2$ per 24 hours.

In some examples, the percent haze was determined. The method used is nearly identical to the procedure set forth in ASTM D-1003-61 except for the use of a Hunterlab Model Spectrophotometer and an improved standardization method which enhances the correlation of the standard reference and the specimen. The formula employed was:

$$\% \text{ Haze} = \frac{T_t - T_s}{T_t} \times 100$$

where $T_t$ = Y transmission value taken at the sphere port and $T_s$ = Y transmission value taken at the lens.

A manual procedure was devised to evaluate the results of the experiments in eliminating or reducing delamination in the examples below. The procedure consisted of visual inspection of a cut-away section of a molded container along with flexing of the specimen in an attempt to cause or further propagate delamination at the edge of the section along the cutting line. Shears were used to effectuate the cutting of the section. The following delamination rating system was used for all of the examples which were rated. A rating of one (1) was best while five (5) was worst.

| Rating | Observation Criterion |
|---|---|
| 1 | No delamination on the cut initially and no delamination after flexing. |
| 2 | No delamination on the cut initially and slight delamination after flexing. |
| 3 | Delamination on the cut initially, but no additional propagation after flexing. |
| 4 | Delamination on the cut initially and further propagation after flexing. |
| 5 | Delamination observed before cutting. |

**Examples C1-C3**

The following composites C1-C3, were made to test the improvement in barrier properties of a molded container having varying amounts of barrier polymer present. A secondary experiment observed the effect of varying the level of catalyst. The polyvinyl chloride polymer used was a PVC homopolymer having an inherent viscosity of 0.68. The polyhydric polymer was an EVOH copolymer, designated commercially as Eval® SC-F101, having about 32 mole % ethylene and a melt index of 1.3. The EVOH was first treated with a 2% solution of allyl triethoxysilane[1]in methanol by mixing in a small Henschel mixer and drying the resin on a tray in an air circulating oven at 140°F.

**Examples (Kg)**

[1] Available from Petrarch Systems, Inc. unit of Huls America.

| | Control | C1 | C2 | C3 |
|---|---|---|---|---|
| PVC | 22.7 | 22.7 | 22.7 | 22.7 |
| Tin Stabilizer | 0.45 | 0.45 | 0.45 | 0.45 |
| Process Aid | 0.4 | 0.4 | 0.4 | 0.4 |
| Lubricants | 0.17 | 0.17 | 0.17 | 0.17 |
| Impact Modifier | 1.81 | 1.81 | 1.81 | 1.81 |
| Treated EVOH | - | 1.13 | 2.27 | 3.40 |
| Catalyst* | - | 0.0025 | 0.005 | 0.0075 |
| Untreated EVOH | 1.81 | - | - | - |

*Di-t-butylperoxide (DTBP)

Using method (ii) above, the ingredients were reactive processed with a free radical catalyst DTBP on a compounding pelletizer. The pellets were placed in an extrusion blow molder and bottles were blown and tested directly on a Mocon Ox-trans 1000. Delamination ratings were performed from cut sections from formed bottles.

| | Control | C1 | C2 | C3 |
|---|---|---|---|---|
| Oxygen Transmission Rate Per Container (cc.$0_2$ per day) | - | 0.10 | 0.091 | 0.129 |
| Avg. of 2 Trials Delamination Rating | 5 | 1 | 3 | 4 |

**Examples C4-C6**

The following experiments were conducted to determine the effect of higher amounts of EVOH polymer on the oxygen permeability rate for a composite. Also, a comparison was made substituting untreated polyvinyl alcohol (PVA). The EVOH was first treated with allyl triethoxysilane in methanol as in the previous examples. Comparisons were made between the oxygen transmission rates of the experimentals and a standard commercial PVC compound containing the PVC polymer used in the examples.

**Examples**

| | C4 | C5 | C6 |
|---|---|---|---|
| PVC | 22.7 | 22.7 | 22.7 |
| Tin Stabilizer | 0.45 | 0.45 | 0.45 |
| Processing Aid | 0.4 | 0.4 | 0.4 |
| Lubricants | 0.17 | 0.17 | 0.17 |
| Impact Modifier | 1.81 | 1.81 | 1.81 |
| Treated EVOH | 3.4 | 4.54 | - |
| PVA (Untreated) | - | - | 1.13 |

| | Control | C4 | C5 | C6 |
|---|---|---|---|---|
| Oxygen Transmission Rate of Film cc.$0_2$•mil/100 in.$^2$ • 24 hrs. | 13.8 | 5.9 | 2.6 | 4.9 |
| Delamination Rating | 1 | 2 | - | 5 |

**Examples C7-C10**

The following example demonstrated differences in delamination resistance of molded containers made with EVOH treated with and without allyl triethoxy silane coupling agent present. The effect of using peroxide catalyst was also observed.

**Examples (Kg)**

| | C7 | C8 | C9 | C10 |
|---|---|---|---|---|
| PVC | 22.7 | 22.7 | 22.7 | 22.7 |
| Tin Stabilizer | 0.45 | 0.45 | 0.45 | 0.45 |
| Process Aid | 0.4 | 0.4 | 0.45 | 0.45 |
| Lubricants | 0.82 | 0.82 | 0.82 | 0.82 |
| Impact Mod. | 0.170 | 0.170 | 0.170 | 0.170 |
| EVOH Untreated | 1.13 | - | - | - |
| EVOH Treated | - | 1.13 | 1.13 | - |
| DTBP | - | - | 0.063 | - |
| Untreated "Selar" | - | - | - | 1.13 |

Observations

Visual observation of Examples C7 and C10 evidenced unacceptable delamination. C7 and C10 are comparable to C15 below which was rated as 5 on the delamination rating scale. Examples C8 and C9 exhibited acceptable delamination. Example C9 exhibited improved delamination resistance when peroxide catalyst was present compared with C8 without catalyst.

**Examples C11-C15**

Silane treated polyvinyl alcohol was compared with similarly treated EVOH in Examples C11-C15. Mercapto functional alkoxy silane was compared with allyl functional alkoxy silane both with EVOH and PVA. The control (C15) employed EVOH with no coupling agent present.

**Examples (g)**

| | C11 | C12 | C13 | C14 | C15 |
|---|---|---|---|---|---|
| PVC | 450 | 450 | 450 | 450 | 450 |
| Tin Stabilizer | 9 | 9 | 9 | 9 | 9 |
| Process Aid | 7.9 | 7.9 | 7.9 | 7.9 | 7.9 |
| Lubricants | 3.4 | 3.4 | 3.4 | 3.4 | 3.4 |
| Impact Modifier | 36 | 36 | 36 | 36 | 36 |
| AS*/EVOH | - | - | 45 | - | - |
| MS**/EVOH | - | - | - | 45 | - |
| AS/PVA | 45 | - | - | - | - |
| MS/PVA | - | 45 | - | - | - |
| EVOH | - | - | - | - | 45 |
| DTBP | 0.1 | 0.1 | 0.1 | 0.1 | - |

*Allyl Silane
**Mercapto Silane

| | C11 | C12 | C13 | C14 | C15 |
|---|---|---|---|---|---|
| Oxygen Transmission cc.$O_2$•mil/100 in.$^2$•24 hrs. | 9.7 | 10.2 | 3.2 | 4.8 | 5.1 |
| Haze (%) | 17.6 | 18.5 | 31.9 | 35.9 | 20.4 |

| | C11 | C12 | C13 | C14 | C15 |
|---|---|---|---|---|---|
| Delamination Rating | 1 | 1 | 1 | - | 5 |

**Examples C16-C22**

The method (iii) outlined above was followed for combining the components in Examples C16-C22. The resulting compositions were processed on a commercial bottle molding machine to compare different silane coupling agents, differing catalyst levels and differing levels of lubricant on the delamination and appearance of molded products obtained.

**Examples (Kg)**

| | C16 | C17 | C18 | C19 | C20 | C21 | C22 |
|---|---|---|---|---|---|---|---|
| PVC | 22.7 | 22.7 | 22.7 | 22.7 | 22.7 | 22.7 | 22.7 |
| Tin Stabilizer | 0.45 | 0.45 | 0.45 | 0.45 | 0.45 | 0.45 | 0.45 |
| Wax Lubricant(1) | 0.09 | 0.09 | 0.09 | 0.09 | 0.09 | 0.09 | 0.09 |
| Mineral Oil(2) | 0.09 | 0.09 | 0.09 | 0.09 | 0.09 | 0.13 | 0.18 |
| Impact Modifier | 2.7 | 2.7 | 2.7 | 2.7 | 2.7 | 2.7 | 2.7 |
| Plasticizer | 0.5 | 0.5 | 0.5 | 0.5 | 0.5 | 0.5 | 0.5 |
| Processing Aid | 0.25 | 0.25 | 0.25 | 0.25 | 0.25 | 0.25 | 0.25 |
| Lubricants | 0.08 | 0.08 | 0.08 | 0.08 | 0.08 | 0.08 | 0.08 |
| EVOH | 2.7 | 2.7 | 2.7 | 2.7 | 2.7 | 2.7 | 2.7 |
| Vinyl Trimethoxy Silane ($X10^{-3}$) | 12 | 12 | 12 | 12 | 12 | - | - |
| Allyl Triethoxy Silane | - | - | - | - | - | 0.012 | - |
| Vinyl Isopropoxy Silane | - | - | - | - | - | - | 0.012 |
| DTBP ($X10^{-3}$) | 6 | 6 | 6 | 1.5 | 7.5 | 6 | 6 |

(1) Silanes were first mixed with paraffin wax lubricant before compositing.
(2) Peroxide catalyst was first mixed with mineral oil before compositing.

| | C16 | C17 | C18 | C19 | C20 | C21 | C22 |
|---|---|---|---|---|---|---|---|
| Delamination Rating | 4 | 3 | 3 | 3 | 4 | 3 | 2 |
| Clarity Rating (1 Best) | 2 | - | - | - | - | 3 | 1 |

**Examples C23-C25**

The Examples (C23-C25) below were directed at demonstrating a wide melt processing window and the use of composite regrind. The reactive coupling agent used was allyl triethoxy silane. The EVOH was first treated with a 2% methanol solution of silane in a Henschel mixer and dried at 140°F in an air circulating oven. Example C24 contained a high acrylonitrile barrier resin in place of EVOH.

**Examples (Kg)**

| | C23 | C24 | C25 |
|---|---|---|---|
| PVC | 22.7 | 22.7 | 22.7 |
| Tin Stabilizer | 0.45 | 0.45 | 0.45 |
| Wax Lubricant | - | 0.09 | - |
| Mineral Oil(1) | 0.091 | 0.045 | 0.091 |
| Impact Modifier | 1.81 | 2.2 | 1.81 |
| Processing Aid | 0.5 | - | - |
| Processing Aid | - | 0.25 | 0.25 |
| Plasticizer | - | 0.50 | 0.50 |
| Lubricants | .080 | .24 | .080 |
| DTBP | 0.005 | 0.005 | 0.005 |
| Treated EVOH/Silane | 2.27 | - | 2.27 |
| High Nitrile Resin(2) | - | 4.5 | - |

(1) Peroxide catalyst predispersed in mineral oil.
(2) Barex® 210 available from BP Performance Polymers, Inc.

Composites C23-C25 were compounded on a Buss-Kneader compounding pelletizer at different temperature ranges (hot and cold stock) prior to injection blow molding of bottle containers for oxygen transmission rate determination. Hot stock was designated for a composite which was compounded and pelletized at 385-395°F. Cold stock was designated as 365-375°F compounding temperatures. Acceptable delamination resistance was seen in C23-C25. The oxygen transmission testing was measured directly on blow molded bottles using the Mocon OX-Tran 1000. In one test, 15 percent of recycled C23 composite was re-processed with virgin C23 composite. The delamination rating was unchanged compared with virgin C23 composite.

| | Cold C23 | Hot C23 | Hot C23 + Regrind | Hot C24 | Hot C25 | PVC Control |
|---|---|---|---|---|---|---|
| Oxygen Transmission Rate of Container cc $0_2$/Pkg/24 hrs. | 0.02 | 0.017 | - | 0.031 | 0.028 | 0.07 |
| Delamination Rating | - | 1 | 1 | - | - | - |

The above discussion has been provided to illustrate the salient features and outline the scope of the present invention. The disclosures hereinabove establish that chemical coupling of multi-phase composites between the aforementioned vinyl polymers and polyhydric barrier polymers overcome the unacceptable difficulties encountered and enable one to obtain acceptable molded articles having improved barrier properties. Other innumerable improvements and modifications are anticipated and it would be impossible to explicitly describe every conceivable example of these. Therefore, omission of any such description is not intended to create any limitation to the present invention. The limitations of the present invention are defined exclusively in the following claims and nothing within this specification is intended to provide any further limitation thereto.

## Claims

**1.** A multi-phase polymer composite having reduced oxygen permeability comprising the reaction product of:

a vinyl thermoplastic polymer selected from at least one of the group consisting of: polyolefin homopolymers, polyolefin copolymers, polyethylene, polypropylene, polyisobutylene, polystyrene, polystyrene copolymer, poly(styrene-acrylonitrile), poly(acrylonitrile-butadiene-styrene), polyvinyl halide homopolymer, polyvinyl chloride homopolymer, and polyvinyl chloride copolymer;

a polyhydric polymer derived from a saponified vinyl ester polymer having greater than about 40 mole percent vinyl alcohol content selected from the group consisting of: polyvinyl acetate, poly(vinyl acetate-vinyl alcohol), poly(vinyl halide-vinyl acetate-vinyl alcohol), hydrolyzed poly(ethylene-vinyl acetate), poly(ethylene-vinyl acetate-vinyl alcohol), poly(ethylene-vinyl alcohol) and poly(ethylene-vinyl chloride-vinyl alcohol), and

a reactive coupling agent selected from at least one of the group consisting of subsitiuted phosphonates, zirconium based compounds, alkyl borates, alkyltin, tetra alkyl titanates, organosilane

esters and organofunctional silanes;
wherein said coupling agent is chemically bonded to both the vinyl thermoplastic polymer component and the polyhydric polymer component.

**2.** A multi-phase polymer composite of Claim 1 wherein said vinyl thermoplastic polymer is a homopolymer of PVC or a copolymer of vinyl chloride and at least one other copolymerizable monomer selected from the group consisting of esters of $\alpha,\beta$-olefinically unsaturated carboxylic acids, esters of ethylenically unsaturated carboxylic acids, esters of ethylenically unsaturated dicarboxylic acids, ethylenically unsaturated nitriles, ethylenically unsaturated amides, vinyl ketones, vinyl esters, vinyl ethers, aromatic olefins, and olefinic hydrocarbons.

**3.** A multi-phase polymer composite of Claim 4 wherein the vinyl chloride copolymer contains copolymerizable monomer selected from at least one of the group consisting of methyl acrylate, ethyl acrylate, octyl acrylate, 2-ethylhexyl acrylate, ethyl methacrylate, methyl methacrylate, dibutylfumarate, acrylonitrile, methacrylonitrile, acrylamide, methacrylamide, vinyl acetate, ethyl vinyl ether, methyl vinyl ketone, $\alpha$-methyl styrene, vinylidene chloride, chloroprene; alkoxy acrylates, 2-ethoxy ethyl acrylate, (2-ethoxy) ethoxy ethyl acrylate, propoxylated neopentylglycol diacrylate, glycidyl acrylates, ethoxylated alkylol acrylates, ethoxylated alkylol methacrylates and (methallyl) glycidyl ether.

**4.** A multi-phase polymer composite of Claim 1 wherein the reactive coupling agent is selected from at least one of the group consisting of halogenated silanes, vinyltrimethoxysilane, methylvinyltrimethoxysilane, vinyltriethoxysilane, methylvinyltriethoxysilane, vinylmethyldimethoxysilane, vinylethyldiethoxysilane, divinyldiacetoxysilane, vinyltris(2-methoxyethoxy)silane, vinylacetoxysilanes, alkenyloxysilanes, acyloxysilanes, allylalkoxysilanes, diallylalkoxysilanes, diallylacetoxysilanes, acrylated alkoxy silane esters, methacrylated alkoxy silane esters, epoxyalkylsilane esters, mercaptoalkylsilane esters, aminoalklylsilanes, ureidoalkylsilane esters, vinylmethyldiacetoxysilane, methyldichlorosilane, trichlorosilane, phenyldichlorosilane, vinylethyldiacetoxysilane, vinyltriacetoxysilane, allytrimethoxysilane, allylmethyldimethoxysilane, allyltriethoxysilane, diallyldimethoxysilane, diallyldiethoxysilane, diallyldiacetoxysilane, triacetoxysilane, methyldiacetoxysilane, phenyl diacetoxysilane, gamma-glycidoxypropyltrimethoxysilane, reaction products of epoxyalkylsilane esters with amines, acids or alcohols, gamma-mercaptopropyltrimethoxysilane, gamma-mercaptopropyltriethoxysilane, gamma-aminopropyltriethoxysilane, gamma-aminopropyltrimethoxysilane, and gamma-ureidoalkyltriethoxysilane.

**5.** A multi-phase polymer composite of Claim 1 in the form of an article selected from the group consisting of a fused pellet, a molded article, and a hollow container.

**6.** The multiphase polymer composite of Claim 1 in the fused state exhibiting a 60 mil oxygen transmission rate of not greater than 5 cc. $0_2$ • mils/100 $in^2$ per 24 hr. which does not delaminate after being molded into a hollow thickwalled container.

**7.** A method of forming a chemically coupled multi-phase barrier composite consisting essentially of:

a vinyl thermoplastic polymer component, selected from at least one of the group consisting of polyolefin homopolymers, polyolefin copolymers, polyethylene, polypropylene, polyisobutylene, polystyrene, polystyrene copolymers, poly(styrene-acrylonitrile), poly(acrylonitrile-butadiene-styrene), polyvinyl halide homopolymer, and polyvinyl chloride homopolymer;

a polyhydric polymer component having greater than about 40 mole percent vinyl alcohol content and selected from the group consisting of polyvinyl acetate, poly(vinyl acetate-vinyl alcohol), poly(vinyl halide-vinyl acetate-vinyl alcohol), hydrolyzed poly(ethylene-vinyl acetate), poly(ethylene-vinyl acetate-vinyl alcohol), poly(ethylene-vinyl alcohol) and poly(ethylene-vinyl chloride-vinyl alcohol);

a reactive coupling agent selected from at least one of the group consisting of substituted phosphonates, zirconium based compounds, alkyl borates, alkyltin, tetra alkyl titanates, organosilane esters, organofunctional silanes, oxirane containing ethylenic unsaturated copolymerizable monomers, acrylamide, methacrylamide, N-alkylolacrylamides, N-methylol acrylamide, N-methylol methacrylamide, N-alkoxy acrylamide, and N-alkoxy methacrylamide; and

conventional compounding ingredients,

wherein either one of said vinyl or polyhydric polymer components is contacted with said reactive coupling agent to form a first reaction product and wherein the first reaction product is combined with

the other said polymer component to form a chemically coupled multi-phase composite.

8. A method of forming a chemically coupled multi-phase barrier composite wherein a vinyl thermoplastic monomer or mixture of monomers is polymerized in the presence of a vinyl copolymerizable monomer which is reactive with a polyhydric polymer, said polyhydric polymer having greater than about 40 mole percent vinyl alcohol, to form a polyhydric polymer reactive vinyl thermoplastic copolymer, wherein said reactive vinyl thermoplastic copolymer is subsequently combined with said polyhydric polymer to form a chemically coupled multi-phase composite, vinylmethyldiacetoxysilane, vinylethyldiacetoxysilane, vinyltriacetoxysilane, allyl trimethoxysilane, allylmethyl dimethoxy silane, allyl triethoxysilane, diallyl dimethoxysilane, diallyldiethoxysilane, diallyldiacetoxysilane, triacetoxysilane, methyldiacetoxysilane, phenyldiacetoxysilane, methacryloxypropyltrimethoxysilane, gamma glycidoxypropyltrimethoxysilane, gamma-mercaptopropyltrimethoxysilane, garmma-mercaptopropyltriethoxysilane, gamma-amino propyltrimethoxy silane, gamma-aminopropyltriethoxysilane, and gamma-ureidoalkyltriethoxysilane.

9. A method of Claim 8 wherein the vinyl copolymerizable polyhydric reactive monomer or reactive coupling agent is selected from at least one of the group consisting of halogenated silanes, vinyltrimethoxysilane, methylvinyltrimethoxysilane, vinyltriethoxysilane, methylvinyltriethoxysilane, vinylmethyldimethoxysilane, vinylethyldiethoxysilane, divinyldiacetoxysilane, vinyltris(2-methoxyethoxy)-silane, vinylacetoxysilanes, alkenoxysilanes, allylalkoxysilanes, diallylalkoxysilanes, diallylacetoxysilanes, acrylated alkoxy silane esters, methacrylated alkoxy silane esters, epoxyalkyl silane esters, reaction products of epoxyalkysilane esters with amines, acids or alcohols, mercaptoalkysilane esters, aminoalkylsilanes, and ureidoalkylsilane esters.